# EUROPEAN PATENT SPECIFICATION

(11) **EP 1 696 748 B1**
(45) Date of publication and mention of the grant of the patent: **22.09.2010**
(21) Application number: 04803416.9
(22) Date of filing: 23.11.2004
(51) Int. Cl.: A23L 3/00, A23B 7/00, A23B 4/00, A23L 1/0524

(54) **PROCESS FOR PREPARING AN EDIBLE BARRIER**
VERFAHREN ZUR HERSTELLUNG EINER ESSBAREN BARRIERE
PROCEDE DE PREPARATION D'UNE BARRIERE COMESTIBLE

(30) Priority: 23.12.2003 EP 03079173
(43) Date of publication of application: 06.09.2006
(73) Proprietor: Unilever N.V., 3013 AL Rotterdam (NL); Unilever PLC, London EC4Y 0DY (GB)
(72) Inventor: BOUWENS, Elisabeth C.M. Unilever R & D Vlaardingen, NL-3133 AT Vlaardingen (NL); VAN DER HIJDEN, Hendrikus, Theodorus, Wilhelmus M., 3133 AT Vlaardingen (NL)
(74) Representative: Kan, Jacob Hendrik
(86) International application number: PCT/EP2004/013654
(87) International publication number: WO 2005/063057

(56) References cited:
- WO-A-96/03546
- US-A- 4 672 034
- OU SHIYI ET AL: "Ferulic acid: pharmaceutical functions, preparation and applications in foods" JOURNAL OF THE SCIENCE OF FOOD AND AGRICULTURE, vol. 84, no. 11, 30 August 2004 (2004-08-30), pages 1261-1269, XP001205991 ISSN: 0022-5142
- THAKUR B R ET AL: "CHEMISTRY AND USES OF PECTIN - A REVIEW" CRITICAL REVIEWS IN FOOD SCIENCE AND NUTRITION, BOCA RATON, FL, US, vol. 37, 1997, pages 47-73, XP009024042 ISSN: 1040-8398

## Description

### FIELD OF THE INVENTION

The invention relates to an edible barrier. More in particular the invention relates to an edible moisture or flavour barrier suitable for use in food products, comprising a cross-linked biopolymer.

### BACKGROUND OF THE INVENTION

Migration of moisture and flavour in food products forms a serious problem because it negatively affects the appearance, taste, freshness, shelf life and consumer satisfaction. Addition of a barrier at surface of ingredients could stop or inhibit water and flavour migration resulting in a better consistency of the ingredients or total product. However, currently available edible moisture barrier technology is not suitable for effectively stopping moisture migration in composite food products during shelf life.

It is an object of the present invention to prevent water and/or flavour migration from ingredients of food products.

Surprisingly, it was found that enzymatic cross-link technology could be effectively applied (meaning covalently cross-linking ferulyolated pectin or ferulyolated biopolymers or vanillin attached biopolymers as chitosan-vanillin) to stop water and/or flavour migration from ingredients. The obtained products showed improved consistency.

Certain polymers containing ferulic acid groups attached to their backbone are known to be gellable by oxidation. An example of these polymers is pectin. The gelling may be achieved by addition of an appropriate amount of an enzyme of the oxidase type e.g. laccase or peroxidase. The ingredients of the application may contain these enzymes which allows the process to occur without addition of exogenous enzymes. The application for addition of barriers are ingredients which leak water, e.g. tomato or leak flavours (oil), e.g. salmon.

WO-A-02/071870 (Unilever) discloses a foamed product wherein cross-linked pectin is homogeneously incorporated, as in food product such as mousse or an ice cream.

The earlier, not pre-published WO04/000041 (Unilever) discloses a method of preparing stable oil in water emulsions wherein a ferulyolated compound is at least partly oxidized during or after formation of the oil in water emulsion.

### DEFINITION OF THE INVENTION

There is provided a process for the preparation of an edible barrier for water and/or flavour and/or lipid transport in a food product, wherein a ferulyolated compound is at least partly oxidized after applying it to the food product. Also provided is a food product, covered by the barrier made according to the process of the invention.

### DETAILED DESCRIPTION OF THE INVENTION

The invention regards the preparation of a barrier or a layer. It has been found that a layer of a cross-linked hydrocolloid, such as sugar beet pectin, applied at the surface of a tomato stops water migration of the tomato. Moreover, the method gels the water inside the tomato and thereby inhibits water transport. Secondly, when such a layer is applied at the surface of smoked salmon, it effectively stops the leakage of fish flavour and fish oil.

The barrier or layer consists of a network of at least partial coupled ferulic acid groups of a ferulyolated compound. This coupling is an oxidation reaction which leads to gel formation or at least increased viscosity of the aqueous phase. The gel forming capacity of e.g. pectins has for example been described in WO-A-98/22513 and WO-A-00/40098 and WO-A-96/03440.

Ferulic acid groups (4-hydroxy-3-methoxy-cinnamyl - groups) are known to be capable of cross-linking in the presence of certain oxidants (e.g. Oosterveld et al; oxidative crosslinking of pectic polysaccharides from sugar beet pulp, Carbohydrate research 328; 199-207, 2000). In the oxidation process a new covalent bond is formed between two individual ferulic acid groups.

The term oxidant is used to indicate an oxidising agent, which can be either a chemical oxidising agent or an enzyme. An enzyme can be used alone or in combination with a co-oxidant such as hydrogen peroxide.

The compound comprising ferulyolated groups is preferably a biopolymer, more preferably a polysaccharide. Examples of suitable polymers include polysaccharides such as pectin, arabinan, galactan, cellulose derivatives, galactomannans such as guar gum, locust bean gum, starches or other polymers comprising hydroxyl groups which can be esterified to a ferulic acid group.

The polymers comprising ferulic acid groups can be naturally occurring or synthesised polymers. Examples of naturally occurring polymers with ferulic acid groups are sugar beet pectin and arabinoxylanes isolated from cereals. Synthetic processes to prepare polymers with ferulic acid groups generally include esterification of ferulic acid to a free hydroxyl group situated on the polymer backbone or on a sugar substituent.

In a highly preferred embodiment, the ferulyolated compound is a pectin, even more preferred sugar beet pectin. The principal building units of pectin are smooth homogalacturonic regions and rhamnified hairy regions in which most neutral sugars are located. Arabinose is the predominant neutral sugar. Galactose is present in rhamnogalacturonan. 50-55% of the ferulic acid groups are linked to arabinose units and about 45-50% of the ferulic acid groups are linked to galactose residues.

In the final product preferably 15 to 80% of all ferulic acid groups are oxidised, after oxidation. It is preferred that the majority of ferulic acid groups is not oxidised before the oxidation. Even more preferred, before oxidation at most 10% of all ferulic acid groups are oxidised.

The oxidation may be accomplished by the action of a powerful chemical oxidant such as potassium periodate, potassium permanganate, or potassium ferricyanide. Preferably, the oxidation is accomplished by use of an oxidising enzyme such as a peroxidase, a polyphenol oxidase e.g. catechol oxidase, tyrosinase, or a laccase.

Peroxidases can be divided into those originating from plants, such as tomato peroxidase or soy bean peroxidase, fungi or bacteria and those originating from a mammalian source. Laccases are obtainable from a variety of microbial sources notably bacteria and fungi (including filamentous fungi and yeasts), and suitable examples of laccases include those obtainable from strains of Aspergillus, Neurospora (e.g. N. crassa), Prodospora, Botrytis, Collybia, Fomes, Lentinus, Pleurotus, Trametes (some species/strains of which are known by various names and/or have previously been classified differently), Polyporus, Rhizoctonia, Coprinus, Psatyrella, Myceliophtora, Schytalidium, Phlebia or Coriolus.

Preferred enzymes are selected from the group comprising tomato peroxidase, horseradish peroxidase, soy bean peroxidase and laccases that show a redox potential of preferably more than 450 mV as described in E. Solomon et al., Chem. Rev. (1996) 2563-2605.

In case an enzymatic oxidising system is applied, the enzyme is preferably added in the form of a solution or a dispersion in an aqueous buffer system. The enzymes cited above are suitable enzymes. Some enzymes, such as peroxidases require the presence of a co-oxidant such as hydrogen peroxide for their activity. The co-oxidant is preferably added separately from the enzyme that requires its presence.

The amount of enzyme added is expressed in terms of activity units. Preferably enzyme is present in excess. The amount of enzyme added is preferably such that fast crosslinking occurs. For a peroxidase the amount of enzyme added is preferably from 10 to 100,000 units ABTS activity per ml of liquid. Preferably, the enzyme is endogeneously present and needs no external addition as for tomato peroxidase present in tomato slices for the production of a tomato-water barrier. If there is no endogenous enzyme activity in the food product, then an exogenous enzyme is preferred, preferably soy bean peroxidase. The oxidation is preferably carried out at a temperature of from -20 °C to 80°C, preferably 4 to 70°C. It will be appreciated that the optimal temperature depends on the oxidation system that has been chosen.

The edible barrier according to the invention preferably has a thickness of about 2 to 1,500 micrometer.

According to another embodiment, the oxidising agent is added to the aqueous phase which already comprises ferulyolated compound, while the enzyme is endogenously present.

The amount of ferulyolated compound is preferably from 0.5 to 2 wt% (g ferulic acid per 100g pectin). The amount of ferulyolated compound used in a stock solution for the barrier is preferably from 6 to 10 wt% (g ferulyolated compound per 100ml solvent). The solution can be sprayed or applied as such at the surface of the ingredient / product. Alternatively, the ferulyolated compound is first applied and secondly a layer of enzyme/ oxidising agent is added. Preferably, the layer is dried in an oven or grill after the solution (barrier) is applied and before the ingredients are used for the final product. The barrier can also be applied as dry powder which is a mixture of ferulyolated compound and one or more oxidising agents. Hydrogen peroxide can be added in solution or can be generated in situ by means of glucose/ glucose oxidase addition.

Food products wherein the barrier may suitably be used are preferably selected from the group comprising leaking ingredients, such as ingredients that leak moisture or flavour or oil. Examples are vegetables, such as tomato or salad, fruit, bread or fish.

The barrier may further comprise additional ingredients such as protein, salt, flavour components, colourants, emulsifiers, acidifying agents, (co)-oxidants such as hydrogen peroxide, and the like.

The invention will now be further illustrated in the following non-limiting examples.

### General

### Sources of ingredients

1. Sugar beet pectin
   - Extracted from sugar beet.
   - Commercially available from CP Kelco (GENU beta pectin type BETA)
2. Enzyme/hydrogen peroxide:
   - Peroxidase non-GM, food grade Biobake Wheat from Quest, the Netherlands.
   - Tomato peroxidase, from the tomato slices, as described in Examples 1 and 2.

Peroxidases need hydrogen peroxide as cofactor (0.0035%= 1 mM). Hydrogen peroxide used is 30% solution of Merck, Germany. Glucose oxidase, non-GM, food grade from Amano in combination with glucose and Biobake wheat were used for some examples.

### 4. Activity assay (ABTS assay)

Add 100 µl 20 mM ABTS (2,2'-azino-bis(3-ethylbenzothiazoline-6-sulfonic acid (ABTS) stock solution made in indicated buffer) to 880 µl 25 mM phosphate buffer, pH 6.0. Incubate for 5' at 30°C. Add 10 µl 100 mM hydrogen peroxide. Start the reaction by addition of 10 µl enzyme (diluted in such a way that a linear curve could be measured). Measure the formation of ABTS radical at 414 nm using a spectrophotometer. Specific activity is defined as: µmol ABTS oxidised per minute per mg protein at pH 6.

### Example 1

### Cherry tomatoes

Cherry tomatoes were cut in half. Three tomato-slices were used as samples 1, 2, and 3. Sample 1 was untreated. Sample 2 and 3 were dipped once on the surface of the tomato by means of a tissue. To sample 2, a layer of 6% pectin solution was added (0.3 g on cherry tomato slide, d=2.5 cm) and then sprayed once with 10 mM H₂O₂ solution. To sample 3 a layer of 6 % pectin solution with 0.2% biobake wheat was added (0.3 g on cherry tomato slide, d=2.5 cm) and then sprayed once with 10 mM H₂O₂ solution

All three samples were dried 60 minutes at room temperature. Then each half of the tomato was put on a filter paper with the cutted side attached to the filter. Water transport was measured after 30 minutes. After incubation overnight the water loss of the samples was analysed by difference in weight. Results are shown in the following table:

| No. | Samples: | Water transport(mm) | Water loss % |
|---|---|---|---|
| 1 | Reference | 12.5 | 15 |
| 2 | Pectin / H₂O₂ | 0.5 | 10 |
| 3 | Pectin + Biobake / H₂O₂ | 0.5 | 7 |

The tomato treated with a barrier of pectin and biobake resulted in the lowest amount of water loss and thus constituted the most effective water barrier. The addition of only sugar beet pectin and hydrogen peroxide (sample 2) formed a very effective water barrier (cross-inking was catalysed by tomato peroxidase) with only 0.5mm water transport while the reference sample contained a high amount (12.5 mm) of water transport.

### Example 2

### Sandwiches with tomato slices

A total of 16 Sandwiches with Parma ham, tomato, mozarella cheese, pesto and lettuce were made. 8 sandwiches were filled with treated tomato slices (with barrier) and 8 reference sandwiches were made (with untreated tomato slices). The treatment of tomato slices was as follows: Add dry powder of sugar beet pectin (Beta pectin, CP Kelco) /sodium acetate anhydrous/biobake Wheat (Quest)/glucose/Hydrase (Amano) ratio: 10 : 2 : 0.14 : 0.2: 0.025. The Sandwiches were sealed by means of a plastic cover and stored for 4 days at 5°C at an angle of 60°.

Water transport from the tomato to the bottom of the sandwich, the plastic cover was clearly visible in the reference sandwiches as wet droplets and wet bread, while the sandwiches with treated tomato slices were still dry and no water droplets were visible at the bottom. When the sandwiches were opened the consistency of the sandwiches with treated tomato slices was significantly better when compared with the references. The sandwiches with treated tomatoes feel dry while the reference sandwiches were soaking.

### Example 3

Prevention of flavour and oil migration of smoked salmon. Smoked salmon was cut in pieces of 3x3 cm and three samples were prepared:
Sample 1 was untreated
Sample 2 was treated with 6% pectin, 0.2% biobake wheat solution, sprayed on time with 10 mM H₂O₂
Sample 3 was treated (dipped) with dry powder mix of pectin, biobake wheat, sodium acetate anhydrous ratio: 10:1:2, and sprayed once with 10 mM H₂O₂

The three pieces of salmon were put on a piece of white bread (5x5 cm). The bread with salmon was untouched for 4 hours at room temperature. After 4 hours the salmon was taken of the bread and the bread was tested on dryness and fish flavour transport. Water transport (dryness of the bread) was observed by pressing all bread pieces on a filter (topside on the filter) and observing the water transport to the filter. Fish flavour transport was analysed by smelling the pieces of bread.

The results showed that the barriers according to the invention were effective in reducing the fish flavour and the wetness of the bread.

| No. | Samples: | sogginess of bread | Fish flavour on bread |
|---|---|---|---|
| 1 | Reference | ++++ (also fatty) | +++++ |
| 2 | 6% pectin solution/biobake/H₂O₂ | - | ++ |
| 3 | dry mix Pectin + Biobake / H₂O₂ | - | +++ |

## Claims

1. Process for the preparation of an edible barrier for water and/or flavour and/or lipid transport in a food product, wherein a ferulyolated compound is at least partly oxidized after applying it to the food product.

2. Process according to claim 1, wherein the ferulyolated compound is a pectin.

3. Process according to claim 1, wherein the ferulyolated compound is a vanillin coupled polymer, e.g. chitosan.

4. Process according to claims 1-3, said edible barrier having a thickness of about 2 to 1,500 micrometer.

5. Process according to any of claims 1-4, wherein the oxidation is carried out by an enzyme or enzymatic system.

6. Process according to claim 5, wherein the oxidation is carried out in situ by an enzyme or enzymatic system which is present in the food product.

7. Food product covered by the barrier made according to the process of claims 1-6.

8. Food product according to claim 7, comprising leaking ingredients such as vegetables, fruit, bread or fish.

## Patentansprüche

1. Verfahren für die Herstellung einer essbaren Barriere für Wasser- und/oder Aroma- und/oder Lipid-Transport in einem Nahrungsmittelprodukt, wobei eine ferulyolierte Verbindung wenigstens teilweise nach Auftragen derselben auf das Nahrungsmittelprodukt oxidiert wird.

2. Verfahren nach Anspruch 1, wobei die ferulyolierte Verbindung ein Pektin ist.

3. Verfahren nach Anspruch 1, wobei die ferulyolierte Verbindung ein Vanillingekoppeltes Polymer, z. B. Chitosan, ist.

4. Verfahren nach den Ansprüchen 1-3, wobei die essbare Barriere eine Dicke von etwa 2 bis 1 500 Mikrometer hat.

5. Verfahren nach einem der Ansprüche 1-4, wobei die Oxidation durch ein Enzym oder ein enzymatisches System durchgeführt wird.

6. Verfahren nach Anspruch 5, wobei die Oxidation in situ durch ein Enzym oder ein enzymatisches System, das in dem Nahrungsmittelprodukt vorhanden ist, durchgeführt wird.

7. Nahrungsmittelprodukt, überzogen mit der Barriere, die nach dem Verfahren nach den Ansprüchen 1-6 hergestellt ist.

8. Nahrungsmittelprodukt nach Anspruch 7, umfassend leckende Ingredienzien, wie zum Beispiel Gemüse, Früchte, Brot oder Fisch.

## Revendications

1. Procédé de préparation d'une barrière comestible pour le transport de l'eau et/ou de l'arôme et/ou des lipides dans un produit alimentaire, dans lequel un composé férulyolé est au moins partiellement oxydé après qu'il a été appliqué au produit alimentaire.

2. Procédé selon la revendication 1, dans lequel le composé férulyolé est une pectine.

3. Procédé selon la revendication 1, dans lequel le composé férulyolé est un polymère couplé à la vanilline, par exemple, un chitosane.

4. Procédé selon les revendications 1 à 3, dans lequel ladite barrière comestible a une épaisseur de 2 à 1500 micromètres.

5. Procédé selon l'une quelconque des revendications 1 à 4, dans lequel l'oxydation est effectuée par une enzyme ou un système enzymatique.

6. Procédé selon la revendication 5, dans lequel l'oxydation est effectuée in situ par une enzyme ou un système enzymatique qui est présent dans le produit alimentaire.

7. Produit alimentaire recouvert par la barrière préparée selon le procédé des revendications 1 à 6.

8. Produit alimentaire selon la revendication 7, comprenant des ingrédients qui fuit tels que les légumes, les fruits, le pain ou le poisson.
